# EUROPEAN PATENT SPECIFICATION

(11) **EP 0 342 004 B1**
(45) Date of publication and mention of the grant of the patent: **27.07.1994**
(21) Application number: 89304726.6
(22) Date of filing: 10.05.1989
(51) Int. Cl.: B21B 37/00

(54) **System and device to control time intervals between billets in rolling mills**
System und Vorrichtung zum Steuern von Zeitintervallen zwischen Walzblöcken in Walzwerken
Système et dispositif pour commander des intervalles de temps entre les billettes dans un laminoir

(30) Priority: 10.05.1988 BR 8802266
(43) Date of publication of application: 15.11.1989
(73) Proprietor: SIDERURGICA MENDES JUNIOR S.A.-SMJ, Juiz de Fora, MG (BR)
(72) Inventor: Drummond, Jose Afonso Cenachi, Juiz de Fora, MG (BR)
(74) Representative: Burke, Steven David

(56) References cited:
- GB-A- 2 116 753
- JP-A-53 115 652
- JP-A-54 142 164
- SU-A- 609 564
- SU-A- 655 443
- SU-A- 778 842
- SU-A- 876 224
- SU-A- 1 018 738
- SU-A- 1 041 185

## Description

The present invention relates to a system and device according to the precharacterising part of claim 1 to control time intervals between billets or blocks in rolling mills and/or similar equipment which allow such control.

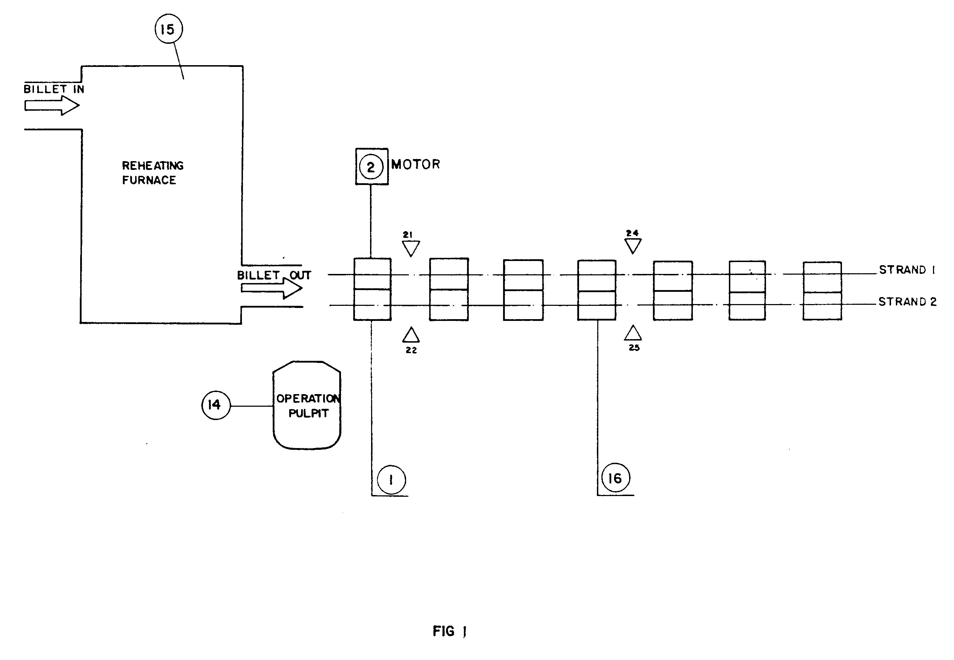

The system provides a signal which indicates the moment in which a billet has to be introduced into the first stand (1) of the rolling mill (Figure 1) on the basis of a preset time interval and an indicator of the real time interval between billets. For this the system includes a current comparator/analyser circuit.

In the present state of technology, the time interval between successive billets occurs without control i.e, it depends on the observation and experience of the operator who withdraws the coke billets and works at the pulpit (14) next to the furnace output (15). As the pulpit operator cannot see the billet tail end coming out from the first stand, for the first stand itself obstructs the operator's vision field, there is a mirror to help him. But it is not an effective aid, since the operator has to determine a random reference point located between the first and second stand. When the tail reaches that point he will have to introduce a new billet in the first stand. However, this point of reference changes according to the speed of rolling mill and from operator to operator. This is because he has neither precise information as to when he has to introduce a new billet nor a feedback of the real time interval. So he is limited by these two factors, and consequently there is a loss in productivity.

To minimize these variations and limitations and obtain an increase in productivity, a system and device has now been developed to make control of the time intervals possible.

This system was originally devised to work in two strand rolling mills, but it can be applied to a rolling mill of any number of strands.

SU-A-876224 describes a control system for a heating furnace and rolling mill of the continuous type, wherein hot billets are extracted from the furnace by an actuator. A drive motor is used to drive billets through part of the rolling mill, and the current in the motor is sensed and its value supplied to a control system which itself supplies a correction signal to the actuator.

In accordance with the present invention there is provided a system for enabling the time interval between the feeding of successive billets to rolling mills or like equipment to be controlled, the system comprising means for sensing the entry and/or exit of a billet to and/or from a part of the rolling mill or like equipment in response to a change in current supplied to a drive motor used to drive the billet through said part and means for generating a signal which can be used to indicate when a subsequent billet is to be fed, characterised in that the billets may be fed into one of two channels, the system further comprising means for detecting whether a billet is present in either or both of said channels, said signal generating means comprising a respective timer for each channel enabled by the detection by said detection means of the presence of a billet in its associated channel to generate said signal at a time following a said change in current.

The main advantages of the invention in comparison with the present state of technology are the following:
- increase in productivity, due to the shorter interval between billets;
- effective gap control between billets to be rolled;
- flexibility to change the gap observing variables such as difference of mechanical properties of the material to be rolled, and/or other productional problems.

There now follows a detailed description of a preferred embodiment of the invention, and reference is made to the accompanying drawings, wherein:
Figure 1 shows a chart illustrating the components of the rolling mill having gap control between billets in rolling mill systems, including a billets reheating furnace (15), an operation pulpit (14) for withdrawing the coke billets, a first stand (1), a fourth stand (16), a driving motor (2), an HMD - Hot Metal Detector (21,22,24 and 25), strand 1 and strand 2;
Figure 2 shows a block diagram of the system for controlling the time interval between billets in rolling mills;
Figure 3 shows a block diagram of the sub-system for determining the real time interval between billets in two-strand rolling mills;
Figure 4 shows a block diagram of the Figure 3 sub-system (11);
Figure 5 shows a block diagram of a current comparator/analyser circuit.

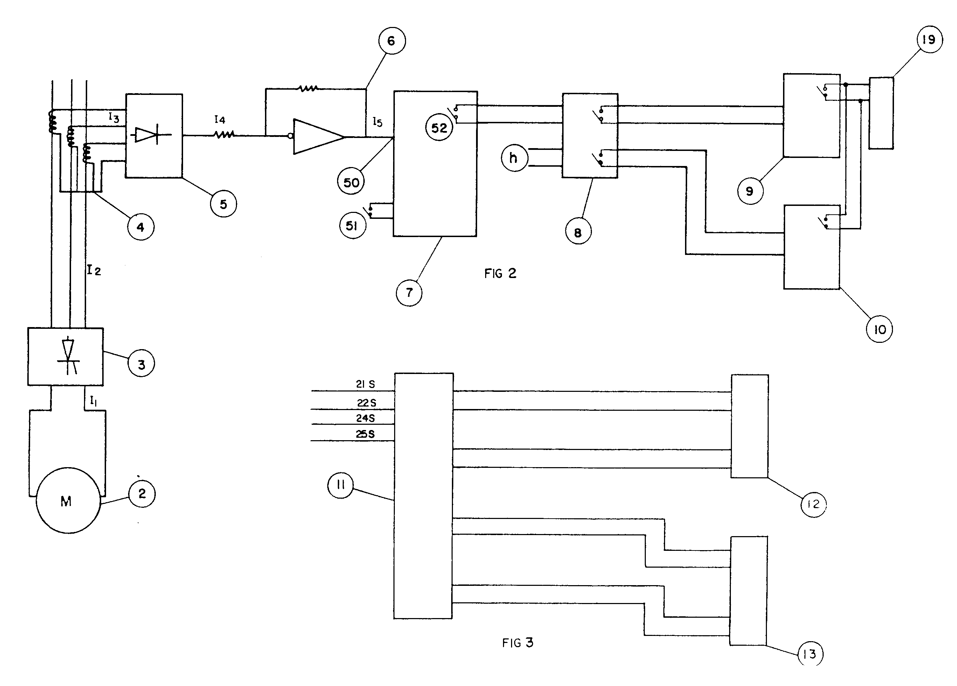

Figures 2 and 3 show, in block diagram form, the interval control system between billets in rolling mills. According to Figure 2, the driving motor (2) requires a current (I₁) from the direct-current converter source (3).

The load variation on the motor shaft produces a variation in the d.c. current (I₁) and consequently a variation in the feeding a.c. current (I₂) which is transformed to a lower current (I₃) by means of transformers (4). The current signal (I₃) is rectified by an electronic rectifier and gives rise to a rectified signal (I₄). This signal is amplified by an operational amplifier (6) which generates an amplified signal (I₅). The current comparator/analyser circuit (7) reads the amplified current signal (I₅), memorizes it and afterwards compares it with a new reading. IN this way, when the motor current rises by a given percentage in relation to the memorized one during a given period of time (in seconds) the system understands that a billet has entered the first stand (1) of the rolling mill (Figure 1). So, the cycle will be repeated whenever a current rise above the memorized value occurs. On the other hand, the current comparator/analyser circuit (7) will also sense a decrease in current corresponding to the exit of the billet from one of the strands of the first stand (1). Similarly, after a preset time (in seconds) this circuit will memorize the current value for later comparison. The position of the output contact (52) of this circuit is defined after the comparison. It is opened when there is a given percentage rise in current value, which characterizes the entrance of a billet in the first stand (1) or the actuation of an external reset (51). It is closed when there is a given percentage decrease of the current value, which characterizes the exit of a billet from the first stand (1). The strand selector circuit verifies the exit and begins the time count in the timer circuit (9, 10), corresponding to the respective strand after the exit, and the external habilitation. The strands selector circuit (8) can operate in a manual and/or automatic mode.

The timers (9) and (10) are preset according to the desired interval and the feedback given by chronometers (12) and (13) (Figure 3), situated in the pulpit which measure the real interval. When the preset gap of time is over a signalling device is activated which shows the operator that he has to introduce a new billet in the mill.

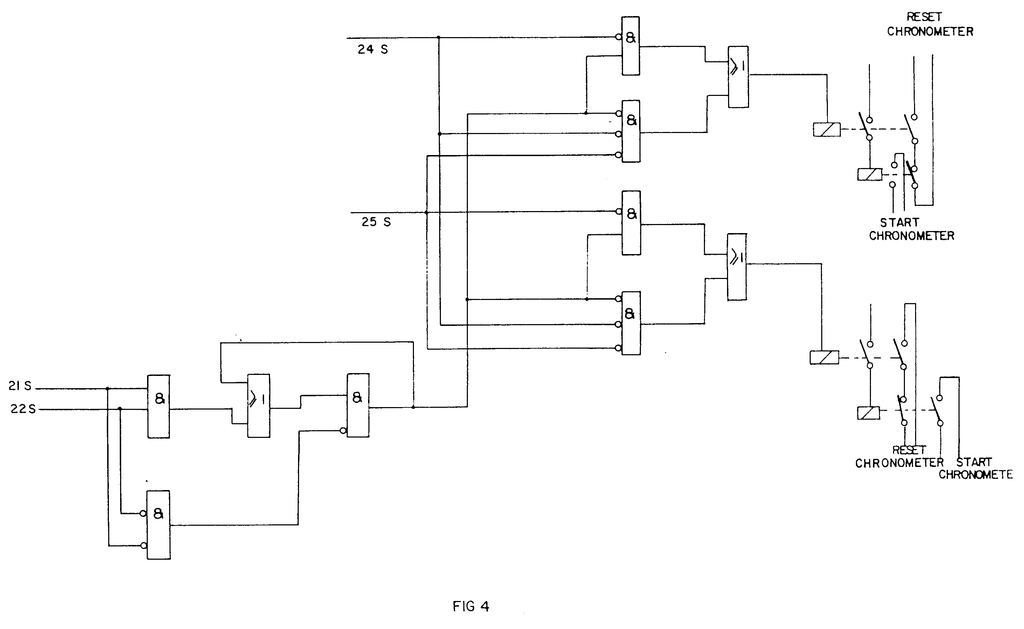

A Programable Logical Controller-PLC (11) (Figures 3 and 4), selects and enables the chronometers (12) and (13), one for each strand, to start the counting of the real gap of time between billets. It receives information (signals 21s, 22s, 24s and 25s) from Hot Metal Detectors-HMD (21, 22, 24 and 25) (Figure 1). Two of these sensors (21 and 22), are located after the first stand (1) and the others (24 and 25), are located after the fourth stand (16). The purpose of the sensors (21 and 22) is to indicate if there is a billet in one of the strands or in both. If there is a billet in just one strand, the PLC (11) will enable one of the two chronometers (12) or (13) to show the real time interval between billets of that strand.

If there are billets in both strands, the chronometers (12 and 13) will show individually the real time interval between billets of each strand. The purpose of the sensors (24 and 25) is to set to zero, start and stop the counting of time. When one of the sensors (24) or (25) does not detect a billet, the PLC (11), sends a command to the chronometer (12 and 13) to set to zero and start the counting of time. When one of the sensors (24) or (25) detects the head end of the coming billet, the PLC (11) sends a command to the chronometer (12 or 13) to stop the counting of time.

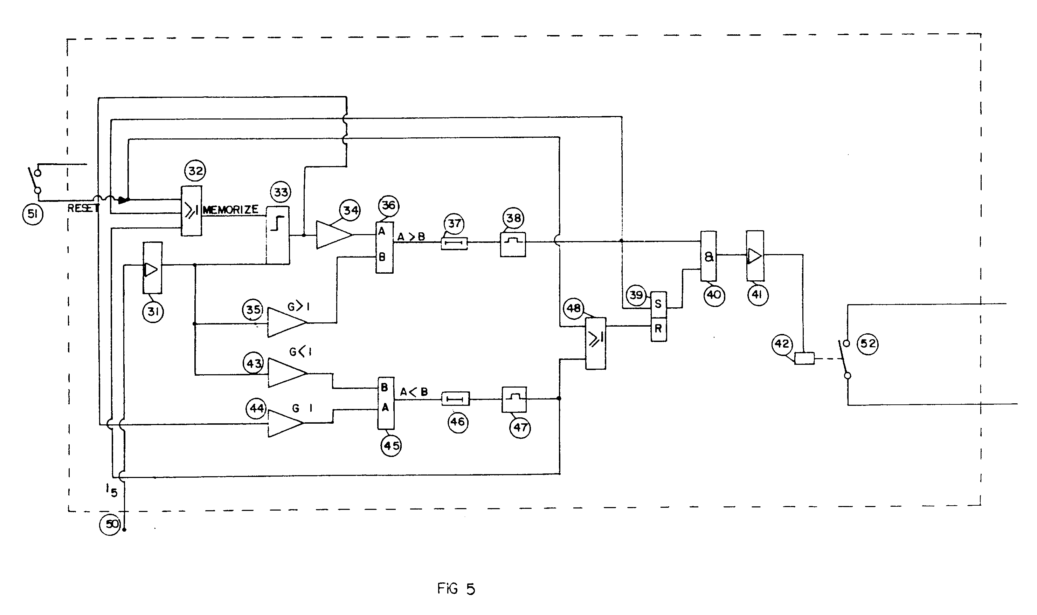

The device to control the time interval between billets in rolling mills, which is a current comparator/analyser circuit (7) or sensor device of motor current, is more fully described below in relation to Figure 5.

The device has an input for the amplified current signal (I₅), an input for reset or external inhibition (51), an operational amplifier (circuit) (31) to allow the use of the information coming from the d.c. converter of the first stand (1) of the rolling mill, without causing any interference in the own converter system. There is a filter included in this circuit whose purpose is to flatten the amplified current signal (I₅) to avoid peak values which would "cheat" the system in case of low loads on the motor shaft. These current peaks are normal and exclusively dependent on the direct current converter source (3).

An OR gate (32), to which is input several control signals, determines when the memorization of the new load sampling from the first stand (1) must be done i.e., new current value of the motor. Its output enables the memorizing circuit (33), "SAMPLE AND HOLD", to read a current sampling and maintain its output unchanged so that it can be used as a basis of comparison. The moment of sampling is determined by the OR gate output (32). A level and switching detector circuit (34) supervises the output signal generated by the memorizing circuit (33). When this signal becomes less than the reference set in the detector, the circuit (34) ignores the signal and switches internally to maintain its output at a known adjustable value which indicates that there is no load in the motor shaft. When the signal is higher than the set reference, the detector allows the signal to pass straight to the comparator circuit (36). An operational amplifier (35) multiplies the motor current signal by a factor greater than 1 before it is compared with the memorized value. The comparator circuit (36) checks the inputs A and B. If input A is greater than B. it means that there was a given percentage reduction in the motor load. A timer circuit (37) delays the output signal of the comparator (36) so that the system does not sense the disturbances of the motor current caused by the load variation when a billet leaves the first stand (1). It is also used to filter peaks of current that may happen bacause of temperature variation along the billet and therefore load variation on the motor. A pulsator circuit (38), ONE SHOT, defines the sampling time for memorization of a new current value, related to the exit of a billet from the fist stand (1), and inhibits the output of AND gate (40), during this time, in order to have another signalling in the moment of the consecutive exit of billets. A FLIP-FLOP (39) receives a pulse from the pulsator circuit (38) and keeps its output activated until it is reset by a signal from the OR gate (48), guaranteeing in this way, that the output remains active until a new positive alteration of load is perceived by the system. An AND gate (40) with an inverter input inhibits the output for a period of time equivalent to the pulse duration of the pulsator circuit (38). A buffer (41) amplifies the signal from the AND gate (40) output so that a relay (42) can be activated. The relay contact is the interface between the current comparator/analyser circuit (7) and the strand selector system (8). A proportional amplifier circuit (43) of gain less than 1, supplies an output signal to the comparator circuit (45). A switching and level detector circuit (44) supervises the signal memorized in the memorizing circuit (33). When the memorized signal becomes greater than the set reference the circuit maintains in its output the memorized value which corresponds to the load at the moment of sampling and memorization. A comparator circuit (45) compares inputs A and B. If input A is less than B. it means that there was a given percentage rise in the motor load. A timer circuit(46) delays the output information from the comparator circuit (45) so that the system does not feel disturbances of the motor current caused by load variation when a billet enters the first stand (1). It is also used to filter current peaks that may occur because of temperature variation along the billet and therefore load variation on the motor. A pulsator circuit (47), ONE SHOT, defines the sampling time for memorization of the current value at the moment of the entrance of another billet in the first stand (1). An OR gate (48) resets the output automatically when a billet enters the first stand (1) or when an external reset is actuated. An output contact (52) is closed when there is a given percentage decrease of the current value, which characterizes the exit of a billet from the first stand (1). The contact is opened when there is a given percentage increase in the current value, which characterizes the entrance of a billet into the first stand (1) or the actuation of the external reset (51).

## Claims

1. A system for enabling the time interval between the feeding of successive billets to rolling mills or like equipment to be controlled, the system comprising means (4-7) for sensing the entry and/or exit of a billet to and/or from a part (1) of the rolling mill or like equipment in response to a change in current supplied to a drive motor (2) used to drive the billet through said part (1) and means for generating a signal which can be used to indicate when a subsequent billet is to be fed, characterised in that the billets may be fed into one of two channels, the system further comprising means (8) for detecting whether a billet is present in either or both of said channels, said signal generating means comprising a respective timer (9,10) for each channel enabled by the detection by said detection means (8) of the presence of a billet in its associated channel to generate said signal at a time following a said change in current.

2. A system as claimed in claim 1, wherein said sensing means (4-7) comprises means (33) for storing a signal indicative of the level of current supplied to said drive motor (2) and means (36,45) for comparing the signal with a signal indicative of the present level and for providing, in response to a predetermined difference therebetween, a signal for indicating that the billet has reached a predetermined location, and for causing the present current level to be stored in place of the previously-stored level.

3. A system as claimed in claim 1 or claim 2, further comprising, for each channel, means (12,13) for determining the time interval between successive billets at a position downstream of said part (1) and means responsive to the determined time interval for calculating the time at which said signal is to be generated.

4. A system as claimed in claim 3, further comprising first sensors (21,22) and second sensors (24,25), the first sensors (21,22) being disposed upstream of the second sensors (24,25) and a Programmable Logical Controller (11) for selecting and enabling the time interval determining means (12,13) to effect the counting of real time between billets in response to the sensor output signals (21s,22s,24s,25s); the function of the first sensors (21,22) being to indicate if there is a billet in one or both of the channels and, if there is a billet in just one channel, to allow the two time interval determining means (12,13) to indicate the real time interval between billets of said one channel and, if there are billets in both channels to indicate individually the real time interval between billets of each channel, the function of the second sensors (24,25) being to set to zero, start and stop the counting of time, the Programmable Logical Controller (11) being arranged to send, after the passage of a billet past the second sensors (24,25), a command to said time interval determining means (12,13) to set to zero and start the counting of time, and, when a subsequent billet activates one of said second sensors (24,25), to stop the counting of time.

5. A system as claimed in any preceding claim, wherein said sensing means (4-7) is arranged to detect a said change in current by means of a current transformer (4), a rectifier (5) and an operational amplifier (6).

6. A system a claimed in claim 4, wherein said sensing means (4-7) further comprises a current comparator-analyser (7) to which an output (50) of said operational amplifier (6) is fed, and a reset input (51) for permitting external inhibition, said comparator-analyser (7) comprising a first operational amplifier (31) for passing the output of said operational amplifier (6), a logical OR gate (32) for receiving control signals indicating a change in said current, a memory circuit (33) for receiving the output of said OR gate (32) and for maintaining a current sampling value at its output to serve as a basis for comparison, a first level and switching detector (34) for passing the output of said memory circuit (33), a second, proportional operational amplifier (35) for amplifying the output of said first operational amplifier (31) to be compared with a memorized value; a first comparator (36) for comparing the outputs of said level switching detector (34) and said second amplifier (35), a timer (37) for delaying the output of the first comparator (36) by a time sufficient for the motor load to be stabilized completely; a first pulsator (38) for defining the sampling time for the memorization of a new current value, and for inhibiting the output from an AND gate (40) during this time; a FLIP-FLOP (39) arranged to receive a pulse from the pulsator (38) and to maintain the signal at its output until a reset pulse is sent by an OR gate (48), said AND gate (40) having an inverter input which inhibits the output for a period of time equivalent to the duration of pulse of the first pulsator (38), a power amplifier (41) for activating a relay (42) and its associated contact (52); a third, proportional amplifier (43) of gain less than 1 whose output is connected to a first input of a second comparator (45); a second level and switching detector (44) for passing the output of said memory circuit (33), said second comparator (45) being arranged to compare the outputs of said third amplifier (43) and said second level and switching detector (44), a timer (46) for delaying the output of the second comparator (45) by a time sufficient for the motor load to be stabilised completely, a second pulsator (47) for defining the sampling time for the memorization of the new current value and an OR gate (48) for providing at its output said reset pulse in response either to an output from said second pulsator (47) or to an external reset signal.

## Patentansprüche

1. System, das es ermöglicht, das Zeitintervall zwischen dem Zuführen aufeinanderfolgender Knüppel an ein Walzwerk oder eine ähnliche Ausrüstung zu steuern, wobei das System eine Einrichtung (4 - 7) zum Erfassen des Eintretens und/oder Herauslaufens eines Knüppels in und/oder aus einem Teil (1) des Walzwerks oder einer ähnlichen Ausrüstung auf eine Änderung des einem Antriebsmotor (2) zugeführten Stroms hin, der zum Bewegen des Knüppels durch den Teil (1) verwendet wird, und eine Einrichtung aufweist, um ein Signal zu erzeugen, das dazu verwendet werden kann, anzuzeigen, wann der nächste Knüppel zuzuführen ist, **dadurch gekennzeichnet**, daß die Knüppel in einen von zwei Kanälen eingegeben werden können und das System ferner eine Einrichtung (8) zum Messen, ob ein Knüppel in einem der Kanäle oder in beiden vorhanden ist, aufweist, wobei die Signalerzeugungseinrichtung einen jeweiligen Timer (9, 10) für jeden Kanal aufweist, der durch die von der Erfassungseinrichtung (8) ausgeführte Erfassung des Vorliegens eines Knüppels im zugehörigen Kanal aktiviert wird, um das genannte Signal zu einem Zeitpunkt zu erzeugen, der auf die Stromänderung folgt.

2. System nach Anspruch 1, bei dem die Meßeinrichtung (4 - 7) eine Einrichtung (33) zum Abspeichern eines Signals, das die Stärke des dem Antriebsmotor (2) zugeführten Stroms anzeigt, und eine Einrichtung (36, 45) aufweist, um das Signal mit einem Signal zu vergleichen, das die aktuelle Stärke anzeigt, und um, auf eine vorgegebene Differenz zwischen diesen, ein Signal zu liefern, das anzeigt, daß der Knüppel eine vorgegebene Position erreicht hat, und um zu veranlassen, daß die aktuelle Stromstärke anstelle der zuvor abgespeicherten Stärke abgespeichert wird.

3. System nach Anspruch 1 oder Anspruch 2, das ferner für jeden Kanal eine Einrichtung (12, 13) zum Ermitteln des Zeitintervalls zwischen aufeinanderfolgenden Knüppeln an einer Position stromabwärts in bezug auf das Teil (1) und eine Einrichtung aufweist, die auf das bestimmte Zeitintervall hin anspricht, um den Zeitpunkt zu berechnen, zu dem das Signal zu erzeugen ist.

4. System nach Anspruch 3, ferner mit ersten Sensoren (21, 22) und zweiten Sensoren (24, 25), wobei die ersten Sensoren (21, 22) stromaufwärts in bezug auf die zweiten Sensoren (24, 25) angeordnet sind, und einer programmierbaren, logischen Steuerung (11) zum Auswählen und Aktivieren der Zeitintervall-Ermittlungseinrichtung (12, 13), um das Zählen der tatsächlichen Zeit zwischen Knüppeln auf die Sensorausgangssignale (21s, 22s, 24s, 25s) hin zu bewirken; wobei die Funktion des ersten Sensors (21, 22) diejenige ist, zu erkennen, ob ein Knüppel in einem der Kanäle oder beiden vorhanden ist, und wenn ein Knüppel nur in einem Kanal vorhanden ist, es den zwei Zeitintervall-Bestimmungseinrichtungen (12, 13) zu ermöglichen, das tatsächliche Zeitintervall zwischen Knüppeln in dem einen Kanal anzuzeigen, und wenn Knüppel in beiden Kanälen vorhanden sind, einzeln die tatsächlichen Zeitintervalle zwischen Knüppeln in jedem Kanal anzuzeigen, wobei die Funktion der zweiten Sensoren (24, 25) diejenige ist, den Zählvorgang für die Zeit auf Null zurückzusetzen, zu starten und anzuhalten, und wobei die programmierbare, logische Steuerung (11) so ausgebildet ist, daß sie nach dem Durchlauf eines Knüppels an den zweiten Sensoren (24, 25) vorbei einen Befehl an die Zeitintervall-Bestimmungseinrichtung (12, 13) aussendet, um den Zählvorgang für die Zeit auf Null zurückzusetzen und zu starten, und dann, wenn ein folgender Knüppel einen der zweiten Sensoren (24, 25) aktiviert, den Zeitzählvorgang anzuhalten.

5. System nach einem der vorstehenden Ansprüche, bei dem die Meßeinrichtung (4 - 7) so ausgebildet ist, daß sie die Stromänderung durch einen Stromtransformator (4), einen Gleichrichter (5) und einen Operationsverstärker (6) mißt.

6. System nach Anspruch 4, bei dem die Meßeinrichtung (4 - 7) ferner einen Strom-Komparator/Analysator (7), dem das Ausgangssignal (50) des Operationsverstärkers (6) zugeführt wird, und einen Rücksetzeingang (51) zum Ermöglichen externer Sperrung aufweist, wobei der Komparator/Analysator (7) einen ersten Operationsverstärker (31) zum Durchlassen des Ausgangssignais des Operationsverstärkers (6), ein logisches ODER-Gatter (32) zum Empfangen von Steuersignalen, die eine Änderung des Stroms anzeigen, eine Speicherschaltung (33) zum Empfangen des Ausgangssignals des ODER-Gatters (32) und zum Aufrechterhalten eines Stromabtastwertes an seinem Ausgang, damit es als Grundlage für einen Vergleich dient, einen ersten Umschalt- und Pegeldetektor (34) zum Durchlassen des Ausgangssignals der Speicherschaltung (33), einen zweiten Proportionaloperationsverstärker (35) zum Verstärken des Ausgangssignals des ersten Operationsverstärkers (31), das mit einem abgespeicherten Wert zu vergleichen ist, einen ersten Komparator (36) zum Vergleichen der Ausgangssignale des Pegelumschaltdetektors (34) und des zweiten Verstärkers (35), einen Timer (37) zum Verzögern des Ausgangssignals des ersten Komparators (36) um eine Zeitspanne, die dazu ausreicht, daß sich die Motorlast vollständig stabilisiert; eine erste Kippeinrichtung (38) zum Festlegen der Abtastzeit für das Einspeichern eines neuen Stromwerts und zum Sperren des Ausgangssignals eines UND-Gatters (40) während dieser Zeit, ein FLIP-FLOP (39), das so ausgebildet ist, daß es einen Impuls von der Kippeinrichtung (38) empfängt und das Signal an seinem Ausgang aufrechterhält, bis ein Rücksetzimpuls durch ein ODER-Gatter (48) geliefert wird, wobei das UND-Gatter (40) einen invertierenden Eingang aufweist, der den Ausgang für eine vorgegebene Zeitspanne sperrt, die der Dauer des Impulses der ersten Kippeinrichtung (38) entspricht, einen Leistungsverstärker (41) zum Aktivieren eines Relais (42) und seines zugeordneten Kontakts (52), einen dritten Proportionalverstärker (43) mit einer Verstärkung kleiner 1, dessen Ausgang mit einem ersten Eingang eines zweiten Komparators (45) verbunden ist, einen zweiten Pegel- und Umschaltdetektor (44) zum Durchlassen des Ausgangssignals der Speicherschaltung (33), wobei der zweite Komparator (45) so ausgebildet ist, daß er die Ausgangssignale des dritten Verstärkers (43) und des zweiten Pegel- und Umschaltdetektors (44) miteinander vergleicht, einen Timer (46) zum Verzögern des Ausgangssignals des zweiten Komparators (45) um eine Zeit, die dazu ausreicht, daß sich die Motorlast vollständig stabilisiert, eine zweite Kippeinrichtung (47) zum Festlegen der Abtastzeit für die Einspeicherung des neuen Stromwerts, und ein ODER-Gatter (48) aufweist, um an seinem Ausgang den Rücksetzimpuls entweder auf ein Ausgangssignal von der zweiten Kippeinrichtung (47) oder auf ein externes Rücksetzsignal hin zu liefern.

## Revendications

1. Installation destinée à permettre le réglage de l'intervalle de temps compris entre l'avance de billettes successives vers des laminoirs ou un appareillage analogue, l'installation comprenant un dispositif (4-7) de détection de l'entrée d'une billette dans une partie (1) du laminoir ou de l'appareillage analogue et/ou la sortie d'une telle billette d'une telle partie (1) en fonction d'un changement du courant transmis à un moteur (2) d'entraînement de la billette dans ladite partie (1), et un dispositif générateur d'un signal qui peut être utilisé pour indiquer le moment où une billette suivante doit avancer, caractérisée en ce que les billettes peuvent avancer dans l'un de deux canaux, l'installation comprenant en outre un dispositif (8) de détection du fait qu'une billette est présente dans l'un de canaux ou les deux, le dispositif générateur de signaux comprenant une minuterie respective (9, 10) pour chaque canal, commandée par la détection assurée par le dispositif de détection (8) de la présence d'une billette dans le canal associé afin qu'elle crée ledit signal à un moment suivant une variation du courant.

2. Installation selon la revendication 1, dans laquelle le dispositif de détection (4-7) comporte un dispositif (33) destiné à conserver un signal représentatif de l'intensité du courant transmis au moteur (2), et un dispositif (36, 45) destiné à comparer le signal à un signal représentatif du niveau actuel et à donner, en fonction d'une différence prédéterminée entre eux, un signal destiné à indiquer que la billette a atteint un emplacement prédéterminé et à provoquer la mémorisation du niveau actuel de courant à la place du niveau précédemment mémorisé.

3. Installation selon la revendication 1 ou 2, comprenant en outre, pour chaque canal, un dispositif (12, 13) destiné à déterminer l'intervalle de temps compris entre les billettes successives à une position qui se trouve en aval de ladite partie (1), et un dispositif commandé par l'intervalle de temps prédéterminé et destiné à calculer le moment auquel ledit signal doit être créé.

4. Installation selon la revendication 3, comprenant en outre des premiers capteurs (21, 22) et des seconds capteurs (24, 25), les premiers capteurs (21, 22) étant disposés en amont des seconds capteurs (24, 25) et un organe logique de commande programmable (11) destiné à sélectionner et permettre le fonctionnement du dispositif (12, 13) de détermination d'intervalle de temps pour assurer le comptage du temps réel entre les billettes en fonction des signaux de sortie des capteurs (21s, 22s, 24s, 25s), la fonction des premiers capteurs (21, 22) étant d'indiquer si une billette est présente dans l'un des canaux ou les deux et, si une billette est présente dans un seul des canaux, à permettre aux deux dispositifs (12, 13) de détermination d'intervalle de temps, d'indiquer l'intervalle de temps réel entre les billettes dans ledit canal et, si les billettes sont présentes dans les deux canaux, à indiquer individuellement l'intervalle de temps réel entre les billettes dans chaque canal, la fonction des seconds capteurs (24, 25) étant de remettre à 0 le temps et de commencer et terminer le comptage du temps, l'organe logique de commande programmable (11) étant réalisé afin qu'il transmette, après le passage d'une billette en face des seconds capteurs (24, 25), une commande aux dispositifs (12, 13) de détermination d'intervalle de temps, afin que le comptage du temps soit remis à 0 et déclenché, et, lorsqu'une billette suivante active l'un des seconds capteurs (24, 25), afin que le comptage du temps cesse.

5. Installation selon l'une quelconque des revendications précédentes, dans laquelle le dispositif de détection (4-7) est destiné à détecter un changement du courant à l'aide d'un transformateur de courant (4), d'un redresseur (5) et d'un amplificateur opérationnel (6).

6. Installation selon la revendication 4, dans laquelle le dispositif de détection (4-7) comporte en outre un circuit analyseur et comparateur de courant (7) auquel est transmis un signal de sortie (50) de l'amplificateur opérationnel (6), et une entrée de rétablissement (51) destinée à permettre une inhibition externe, le circuit analyseur et comparateur (7) comprenant un premier amplificateur opérationnel (31) destiné à transmettre le signal de sortie de l'amplificateur opérationnel (6), une porte logique OU (32) destinée à recevoir les signaux de commande indiquant un changement du courant, un circuit à mémoire (33) destiné à recevoir le signal de sortie de la porte OU (32) et à maintenir une valeur d'échantillonnage du courant à sa sortie afin qu'elle soit utilisée comme base pour une comparaison, un premier détecteur de niveau et de commutation (34) destiné à transmettre le signal de sortie du circuit à mémoire (33), un second amplificateur opérationnel proportionnel (35) destiné à amplifier le signal de sortie du premier amplificateur opérationnel (31) afin qu'il puisse être comparé à une valeur mémorisée, un premier comparateur (36) destiné à comparer les signaux de sortie du détecteur de commutation de niveau (34) et du second amplificateur (35), une minuterie (37) destinée à retarder le signal de sortie du premier comparateur (36) d'un temps suffisant pour que la charge du moteur se stabilise complètement, un premier circuit de pulsation (38) destiné à déterminer l'intervalle d'échantillonnage pour la mémorisation d'une nouvelle valeur de courant et pour l'inhibition du signal de sortie d'une porte ET (40) pendant ce temps, une bascule (39) destinée à recevoir une impulsion du circuit de pulsation (38) et à maintenir le signal à sa sortie jusqu'à la transmission d'une impulsion de remise à zéro à une porte OU (48), la porte ET (40) ayant une entrée d'inversion qui inhibe le signal de sortie pendant une période qui équivaut à la durée de l'impulsion du premier organe de pulsation (38), un amplificateur de puissance (41) destiné à activer un relais (42) et son contact associé (52), un troisième amplificateur proportionnel (43) de gain inférieur à 1 et dont le signal de sortie est transmis à une première entrée d'un second comparateur (45), un second détecteur de niveau et de commutation (44) destiné à transmettre le signal de sortie du circuit à mémoire (33), le second comparateur (45) étant destiné à comparer les signaux de sortie du troisième amplificateur (43) et du second détecteur de niveau et de commutation (44), une minuterie (46) destinée à retarder le signal de sortie du second comparateur (45) d'un temps suffisant pour que la charge du moteur se stabilise complètement, un second circuit de pulsation (47) destiné à déterminer le temps d'échantillonnage pour la mémorisation de la nouvelle valeur du courant, et une porte OU (48) destinée à transmettre à sa sortie l'impulsion de remise à zéro à la suite d'un signal de sortie du premier organe de pulsation (47) ou d'un signal externe de remise à zéro.
